(19) Europäisches Patentamt
European Patent Office
Office européen des brevets

(11) EP 4 782 229 A1

(12) EUROPÄISCHE PATENTANMELDUNG

(43) Veröffentlichungstag:
29.07.2026  Patentblatt 2026/31

(21) Anmeldenummer: 25153540.7

(22) Anmeldetag: 23.01.2025

(51) Internationale Patentklassifikation (IPC):
**B60G 7/00** (2006.01)

(52) Gemeinsame Patentklassifikation (CPC):
**B60G 7/001;** B60G 2204/4308; B60G 2206/0122;
B60G 2206/122

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: Benteler Automobiltechnik GmbH
33102 Paderborn (DE)

(72) Erfinder:
• MEYER, Stephan
33605 Bielefeld (DE)

• LÜTKENHAUS, Guido
33649 Bielefeld (DE)
• OTT, Alexander
59590 Geseke (DE)

(74) Vertreter: Ksoll, Peter
Bockermann Ksoll
Griepenstroh Osterhoff
Patentanwälte
Bergstrasse 159
44791 Bochum (DE)

Bemerkungen:
Geänderte Patentansprüche gemäss Regel 137(2)
EPÜ.

(54) **ZWEISCHALIGER LENKER FÜR EINE RADAUFHÄNGUNG EINES KRAFTFAHRZEUGS**

(57) Die Erfindung betrifft einen zweischaligen Lenker (1) für eine Radaufhängung eines Kraftfahrzeugs, einer oberen Schale (12) und eine untere Schale (13), wobei der Lenker (1) einem ersten Endabschnitt (2) zur radseitigen Anbindung und einem zweiten Endabschnitt (3) zur Anbindung an einem Fahrwerksträger aufweist und zwischen den beiden Endabschnitten (2, 3) ein als Hohlprofil ausgebildeter Lenkerabschnitt (4) angeordnet ist. Der Lenkerabschnitt (4) weist entlang wenigstens 80 % seiner Längserstreckung (L) Querschnittsprofile (7) mit einer relativen Dickenrücklage (rDr) von 25 bis 45 % auf.

Fig. 2

EP 4 782 229 A1

**Beschreibung**

Die vorliegende Erfindung betrifft einen zweischaligen Lenker für eine Radaufhängung eines Kraftfahrzeugs gemäß den Merkmalen im Oberbegriff des Anspruchs 1.

Lenker sind in der Fahrwerkstechnik Komponenten der Radaufhängung von Kraftfahrzeugen. Sie führen den Radträger und verbinden ihn mit dem Fahrzeugkörper. Über die Lenker werden auf den Radträger wirkende Kräfte und Momente in den Fahrzeugkörper eingeleitet.

Um den Verbrauch der für den Antrieb der Kraftfahrzeuge notwendigen Energie zu reduzieren und gleichzeitig dessen Reichweite zu erhöhen, werden insbesondere Elektroautos möglichst aerodynamisch ausgelegt, so dass sie möglichst wenig Luftwiderstand erfahren. Dabei spielt auch die aerodynamische Auslegung des Unterbodens der Kraftfahrzeuge eine entscheidende Rolle.

Aus der EP 3 498 504 B1 ist es bekannt, Lenker einer Radaufhängung eines Kraftfahrzeugs mit aerodynamischen Verkleidungen bzw. Abdeckungen zu versehen, welche den Luftwiderstand der Lenker reduzieren können. Diese können, wie in der US 2007/0096420 A1 offenbart, direkt an den Lenker angebracht werden oder, wie die US 12,103,352 B2 lehrt, ganze Bauteilgruppen des Kraftfahrzeugs abdecken.

Die Nutzung entsprechender Verkleidungen ist jedoch mit zusätzlichen Kosten verbunden und das Gewicht des Kraftfahrzeugs wird erhöht. Zudem ist der zur Verfügung stehende Bauraum im Bereich der Radaufhängung sehr begrenzt, so dass es oftmals nicht möglich ist, Abdeckungen an den Lenkern anzubringen, ohne die Funktion der Radaufhängung zu beeinträchtigen.

Hiervon ausgehend ist die Aufgabe der vorliegenden Erfindung einen Lenker für eine Radaufhängung eines Kraftfahrzeugs aufzuzeigen, dessen Strömungswiderstand gegenüber im Stand der Technik bekannten Lenkern reduziert ist.

Gelöst wird diese Aufgabe durch einen zweischaligen Lenker für eine Radaufhängung eines Kraftfahrzeugs mit den Merkmalen im Anspruch 1.

Vorteilhafte Ausführungsvarianten der Erfindung sind Gegenstand der abhängigen Ansprüche.

Ausgestaltungen und Modifikationen von Merkmalen des erfindungsgemäßen Lenkers, die einzeln oder in Kombination die Erfindung in technisch vorteilhafter Weise ausgestalten und/oder weiterbilden, ergeben sich auch aus der Beschreibung und den beigefügten Zeichnungen.

Der erfindungsgemäße Lenker für eine Radaufhängung eines Kraftfahrzeugs ist zweischalig ausgebildet und weist eine obere Schale und eine untere Schale auf. Im Vergleich zu einschaligen Lenkern, insbesondere Gusseisenlenkern, kann durch die zweischalige Ausbildung des Lenkers zusätzlich Gewicht eingespart werden.

Der Lenker weist einen ersten Endabschnitt zur radseitigen Anbindung und einen zweiten Endabschnitt zur Anbindung an einen Fahrwerksträger auf. Zwischen den beiden Endabschnitten ist ein als Hohlprofil ausgebildeter Lenkerabschnitt angeordnet.

Der Lenker ist bevorzugt so im Kraftfahrzeug positioniert, dass der Lenkerabschnitt in Längsrichtung quer, besonders bevorzugt im Wesentlichen orthogonal zur Längsrichtung des Kraftfahrzeugs angeordnet ist.

Der Lenkerabschnitt weist eine beliebige Anzahl an Querschnittsprofilen auf. Ein Querschnittsprofil entspricht dem Querschnitt des Lenkerabschnitts an einer beliebigen Stelle in Längsrichtung zwischen dem ersten Endabschnitt und dem zweiten Endabschnitt.

Ein Querschnittsprofil kann mittels der Profiltiefe, der maximalen Profildicke, der Dickenrücklage, der relativen Profildicke und der relativen Dickenrücklage charakterisiert werden. Diese geometrischen Kennwerte können für jedes Querschnittsprofil entlang der Längsrichtung des Lenkerabschnitts bestimmt werden.

Die Profiltiefe entspricht dem Abstand zwischen einer Profilnase und einer Profilhinterkante des Querschnittsprofils. Die Profilnase ist zu einer Frontseite des Kraftfahrzeugs orientiert, während die Profilhinterkante zu einer Rückseite des Kraftfahrzeugs orientiert ist.

Die maximale Profildicke kennzeichnet den maximalen Abstand zwischen einer Oberseite der Kontur eines Querschnittprofils und einer Unterseite der Kontur eines Querschnittsprofils.

Die Dickenrücklage ist ein Maß für den Abstand zwischen der Profilnase und der maximalen Profildicke gemessen entlang der Profiltiefe eines Querschnittprofils. Die Dickenrücklage entspricht etwa dem Ort der maximalen Strömungsgeschwindigkeit und des kleinsten statischen Druckes.

Die relative Dickenrücklage ist das Verhältnis der Dickenrücklage zur Profiltiefe. Sie wird in Prozent ausgedrückt.

Die relative Profildicke ist das Verhältnis der maximalen Profildicke zur Profiltiefe. Sie wird ebenfalls in Prozent ausgedrückt.

Erfindungswesentlich ist, dass der Lenkerabschnitt entlang wenigstens 80 % seiner Längserstreckung Querschnittsprofile mit einer relativen Dickenrücklage von 25 % bis 45 % aufweist. Das bedeutet, dass der Abstand zwischen der Profilnase und der maximalen Profildicke, mithin die Dickenrücklage, nur 25 bis 45 % der Profillänge des jeweiligen Querschnittprofils entspricht. Im Bereich der Dickenrücklage wird eine stabile und glatte Strömung erzeugt. Im Rahmen der Erfindung konnte nachgewiesen werden, dass der Strömungswiderstandkoeffizient (cw-Wert) des Lenkers durch die erfindungsgemäße Ausbildung des Lenkerabschnitts um einen Wert von mehr als 0,05 gegenüber im Stand der Technik bekannten Lenkern reduziert werden kann. Im Stand der Technik bekannte Lenker weisen üblicherweise entlang der Längserstreckung des Lenkerabschnitts Querschnittsprofile mit einer im Wesentlichen konstanten Profilbreite auf, sodass keine maximale Profilbreite im Sinne der Erfindung ausgebildet ist. Zudem sind Lenker bekannt, bei denen die maximale Profilbreite direkt an der Profilnase oder an der Profilhinterkante ausgebildet ist. Erst durch die erfindungsgemäße Dickenrücklage der Querschnittsprofile ist die Aerodynamik des Lenkers so verbessert, dass keine zusätzlichen Abdeckungen erforderlich sind.

Die äußere Kontur der Querschnittsprofile des Lenkerabschnitts ist somit insbesondere tropfenförmig ausgebildet. Die Kontur der Querschnittsprofile ist im Bereich der Profilnase abgerundet. Es folgt eine allmähliche Profildickenzunahme bis zur maximalen Profildicke. Ausgehend von der maximalen Profildicke nimmt die Profildicke kontinuierlich bis zur ebenfalls abgerundeten Profilhinterkante ab.

Bevorzugt weist der Lenkerabschnitt entlang wenigstens 90 %, besonders bevorzugt entlang seiner kompletten Längserstreckung Querschnittsprofile mit einer relativen Dickenrücklage von 25 % bis 45 % auf. So kann der Strömungswiderstand des Lenkers reduziert werden.

Vorzugsweise weisen die Querschnittsprofile eine relative Dickenrücklage von 30 % bis 40 % auf, besonders bevorzugt von 33 % bis 38 %. Diese Wertebereiche haben sich im Rahmen der Erfindung als besonders vorteilhaft für die Reduzierung des Luftwiderstands des Lenkers herausgestellt.

Die Querschnittsprofile weisen insbesondere eine Dickenrücklage von 30 mm bis 70 mm, bevorzugt von 35 mm bis 50 mm auf.

In einer besonders vorteilhaften Ausführungsform der Erfindung weisen die Querschnittsprofile eine relative Profildicke von 30 % bis 50 %, bevorzugt von 35 % bis 45 %, besonders bevorzugt von 40 % bis 45 % auf.

Die Querschnittsprofile weisen insbesondere eine Profiltiefe von 80 mm bis 200 mm, bevorzugt von 80 mm bis 170 mm, besonders bevorzugt von 90 mm bis 160 mm und ganz besonders bevorzugt von 100 mm bis 150 mm auf.

Die maximale Profildicke der Querschnittsprofile beträgt bevorzugt 35 mm bis 70 mm, besonders bevorzugt 40 mm bis 60 mm.

Die obere und untere Schale des zweischaligen Lenkers sind bevorzugt miteinander gefügt, insbesondere verschweißt. So kann ein sicherer Halt zwischen den Schalen sichergestellt werden.

Vorzugsweise sind die obere Schale und die untere Schale auf der zur Frontseite des Kraftfahrzeugs orientierten Seite des Lenkerabschnitts auf Stoß gefügt, mithin im Bereich der Profilnase der Querschnittsprofile. Die Profilnase weist somit keine Unregelmäßigkeiten auf, die zu einer ungünstigen Verwirbelung der auf die Profilnase auftreffenden Luftströmung führen könnten.

Die obere Schale und die untere Schale sind bevorzugt auf der zur Rückseite des Kraftfahrzeugs orientierten Seite des Lenkerabschnitts, mithin im Bereich der Profilhinterkante, überlappend miteinander gefügt. Die Überlappung der oberen und unteren Schale ist somit an der Profilhinterkante des Querschnittsprofils ausgebildet. Durch die Überlappung kann das Fügen der Schalen vereinfacht werden und es kann ein Toleranzausgleich erfolgen. Es hat sich zudem im Rahmen der Erfindung herausgestellt, dass eine Überlappung der Schalen an der Profilhinterkante der Querschnittsprofile die Strömung nicht negativ beeinflusst und somit nicht zu einem höheren Strömungswiderstand des Lenkers führt.

Der Lenker ist insbesondere als Querlenker ausgebildet und kann einen zusätzlichen Lenkerarm aufweisen, der über einen dritten Endabschnitt ebenfalls an einem Fahrwerksträger angebunden werden kann. Der dritte Endabschnitt ist bevorzugt am Ende des Lenkerarms angeordnet, wobei der Lenkerarm als Hohlprofil ausgebildet ist und an der am zweiten Endabschnitt angrenzenden Lenkerabschnittsseite an diesen angrenzt.

Der Lenker ist insbesondere aus einem Stahlmaterial hergestellt.

Die Erfindung umfasst auch ein Kraftfahrzeug, in welchem ein erfindungsgemäßer Lenker mit einer beliebigen Kombination der zuvor genannten Merkmale angeordnet ist.

Die Erfindung ist nachfolgend anhand von rein schematisch dargestellten Zeichnungen näher beschrieben. Es zeigen:

Figur 1 einen erfindungsgemäßen Lenker in einer Draufsicht,

Figur 2a den erfindungsgemäßen Lenker im Schnitt A-A der Figur 1,

Figur 2b den erfindungsgemäßen Lenker im Schnitt B-B der Figur 1 und

Figur 2c den erfindungsgemäßen Lenker im Schnitt C-C der Figur 1.

Für gleiche oder einander entsprechende Bauteile werden dieselben Bezugszeichen verwendet, auch wenn wiederholte Beschreibung aus Vereinfachungsgründen entfällt.

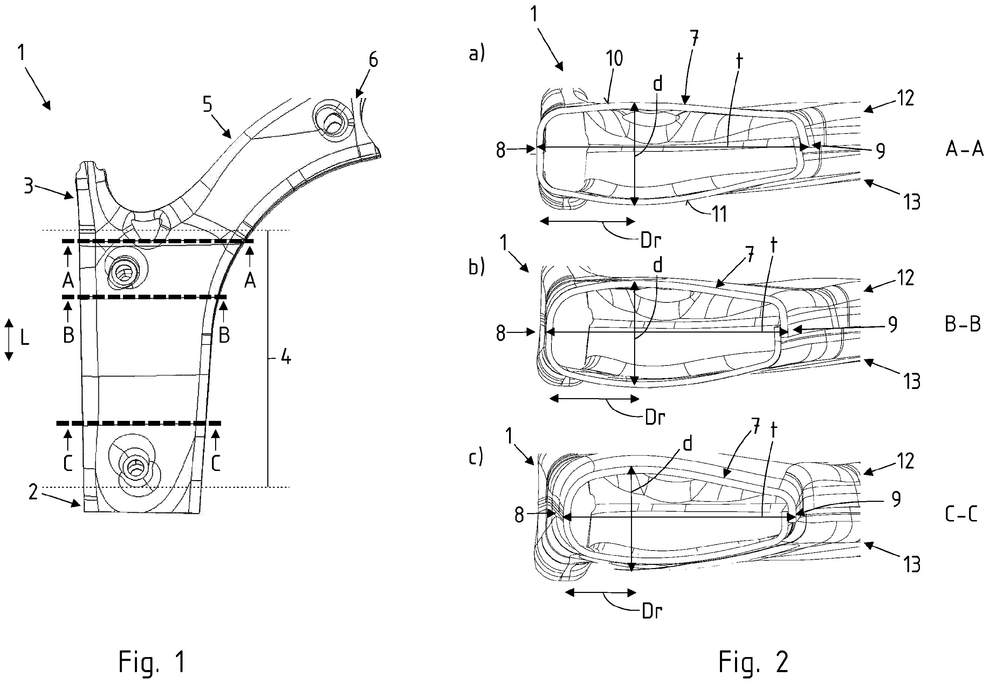

Die Figur 1 zeigt einen erfindungsgemäßen Lenker 1 für eine Radaufhängung eines nicht näher dargestellten Kraftfahrzeugs in einer Draufsicht.

Es handelt sich bei dem Lenker 1 um einen Querlenker. Der Querlenker ist als Dreieckslenker ausgebildet.

Erfindungsgemäß weist der Lenker 1 einen ersten Endabschnitt 2 zur radseitigen Anbindung und einen zweiten Endabschnitt 3 zur Anbindung an einen nicht näher dargestellten Fahrwerksträger auf. Die Endabschnitte 2, 3 sind in Figur 1 nur angedeutet und die dazugehörigen Lageraufnahmen nicht dargestellt.

Zwischen den beiden Endabschnitten 2, 3 ist ein als Hohlprofil ausgebildeter Lenkerabschnitt 4 angeordnet. Der Lenker 1 ist so im Kraftfahrzeug positioniert, dass der Lenkerabschnitt 4 mit seiner Längserstreckung L quer, insbesondere im Wesentlichen orthogonal zur Längsrichtung des nicht näher dargestellten Kraftfahrzeugs orientiert ist.

Der Lenker 1 weist einen zusätzlichen Lenkerarm 5 mit einem dritten, in Figur 1 nur angedeuteten Endabschnitt 6 auf, welcher ebenfalls für die Anbindung an einen Fahrwerksträger ausgelegt ist. Der Lenkerarm 5 geht benachbart zum zweiten Endabschnitt 3 in den Lenkerabschnitt 4 über. Der Lenkerarm 5 ist für die vorliegende Erfindung nicht zwingend erforderlich. Der Lenker 1 kann auch lediglich zwei Endabschnitte 2, 3 und einen dazwischen angeordneten Lenkerabschnitt 4 aufweisen.

Die Figuren 2a bis 2c zeigen den in der Figur 1 dargestellten Lenker 1 in den Querschnittsansichten A-A, B-B und C-C. Die Querschnittsansichten zeigen unterschiedliche Querschnittsprofile 7 entlang der Längserstreckung L des Lenkerabschnitts 4.

Die dargestellten Querschnittsprofile 7 weisen jeweils eine Profilnase 8 sowie eine Profilhinterkante 9 auf. Die Profilnase 8 ist zu einer Frontseite des Kraftfahrzeugs orientiert. Fährt das Kraftfahrzeug in Vorwärtsrichtung, steht die Profilnase 8 des Querschnittsprofils 7 des Lenkerabschnitts 4 somit im Wind und kommt als erstes mit der Luftströmung in Kontakt. Die Profilhinterkanten 9 der Querschnittsprofile 7 sind folglich zu einer Rückseite des Kraftfahrzeugs orientiert.

Die Querschnittsprofile 7 weisen eine Profiltiefe t von 100 mm bis 200 mm auf. Die Profiltiefe t entspricht dem Abstand zwischen der Profilnase 8 und der Profilhinterkante 9. Die Profiltiefe t der Querschnittsprofile 7 des Lenkerabschnitts 4 nimmt ausgehend vom ersten Endabschnitt 2 bis zum zweiten Endabschnitt 3 hin zu.

Die Querschnittsprofile 7 weisen ferner eine maximale Profildicke d von 40 mm bis 70 mm auf. Die maximale Profildicke d kennzeichnet den maximalen Abstand zwischen einer Oberseite 10 und einer Unterseite 11 der Querschnittsprofile 7. Sie kann auch als maximale Höhe des jeweiligen Querschnittsprofils 7 bezeichnet werden. Die maximale Profildicke d ist im Wesentlichen orthogonal zur Profiltiefe t ausgerichtet.

Die jeweiligen Querschnittsprofile 7 weisen eine Dickenrücklage Dr von 35 mm bis 70 mm auf. Die Dickenrücklage Dr kennzeichnet den Abstand zwischen der Profilnase 8 und der maximalen Profildicke d entlang der Profiltiefe t.

Erfindungsgemäß weist der Lenkerabschnitt 4 entlang wenigstens 80 % seiner Längserstreckung L Querschnittsprofile 7 mit einer relativen Dickenrücklage rDr von 25 % bis 45 % auf. Die relative Dickenrücklage rDr ist das Verhältnis zwischen der Dickenrücklage Dr und der Profiltiefe t des jeweiligen Querschnittsprofils 7. Sie wird in Prozent angegeben und mit der folgenden Formel berechnet:

$$rDr = \frac{Dr}{t} 100 \, [\%]$$

Aufgrund der erfindungsgemäßen relativen Dickenrücklage rDr weisen die Querschnittsprofile 7 eine tropfenförmige Form auf. Ausgehend von der Profilnase 8 weitet sich die Kontur der Querschnittsprofile 7 mit einer Rundung aus, bis die charakteristische maximale Profildicke d erreicht wird. Nachdem die maximale Profildicke d erreicht wurde, nimmt die Profildicke der Querschnittsprofile 7 kontinuierlich ab und die Kontur geht in die ebenfalls abgerundete Profilhinterkante 9 über. Dabei ist der Abstand zwischen der Profilnase 8 und der maximalen Profildicke d, welche durch die Dickenrücklage Dr angegeben wird, deutlich geringer als der Abstand zwischen der maximalen Profildicke d und der Profilhinterkante 9. Diese Ausbildung des Lenkerabschnitts 4 hat sich im Rahmen der Erfindung als besonders vorteilhaft für eine Reduzierung des Strömungswiderstands des Lenkers 1 herausgestellt. Somit können zusätzliche Abdeckungen zur Verbesserung der Aerodynamik des Lenkers 1 entfallen.

Die jeweiligen Querschnittsprofile 7 weisen zudem eine relative Profildicke rD von 40 % bis 45 % auf. Die relative Profildicke rD beschreibt das Verhältnis der maximalen Profildicke d zur Profiltiefe t. Die relative Profildicke rD wird ebenfalls in Prozent angegeben und berechnet sich wie folgt:

$$rD = \frac{d}{t} 100 \, [\%]$$

Der Figur 2 ist ferner zu entnehmen, dass der Lenker 1 zweischalig ausgebildet ist und eine obere Schale 12 und eine untere Schale 13 aufweist. Die obere Schale 12 und die untere Schale 13 sind miteinander verschweißt.

Im Bereich der Profilnase 8 der Querschnittsprofile 7 des Lenkerabschnitts 4 sind die Schalen 12, 13 auf Stoß miteinander gefügt. Da die Profilnase 8 zu einer Frontseite des Kraftfahrzeugs orientiert ist, wird diese von der durch die Fahrt erzeugten Strömung als erstes getroffen. Um aerodynamisch ungünstige Verwirbelungen an dieser Stelle zu vermeiden, sind die obere Schale 12 und die untere Schale 13 daher auf Stoße geschweißt, so dass möglichst geringe Unebenheiten an diesem Punkt erzeugt sind.

An der Profilhinterkante 9 der Querschnittsprofile 7 des Lenkerabschnitts 4 sind die obere Schale 12 und die untere Schale 13 überlappend miteinander verschweißt. Durch die Überlappung können Spannungen zwischen der oberen Schale 12 und der unteren Schale 13 ausgeglichen werden. Zudem hat sich im Rahmen der Erfindung gezeigt, dass eine entsprechende Überlappung der Schalen 12, 13 an der Profilhinterkante 9 sich nicht nachteilig auf den Strömungswiderstand des Lenkers 1 auswirkt.

**Bezugszeichen:**

1 - Lenker
2 - erster Endabschnitt
3 - zweiter Endabschnitt
4 - Lenkerabschnitt
5 - Lenkerarm
6 - dritter Endabschnitt
7 - Querschnittsprofil
8 - Profilnase
9 - Profilhinterkante
10 - Oberseite v. 7
11 - Unterseite v. 7
12 - obere Schale
13 - untere Schale

d - maximale Profildicke
Dr - Dickenrücklage
rDr - relative Dickenrücklage
rD - relative Profildicke
L - Längserstreckung v. 4
t - Profiltiefe

**Patentansprüche**

1. Zweischaliger Lenker (1) für eine Radaufhängung eines Kraftfahrzeugs, mit einer oberen Schale (12) und eine untere Schale (13), wobei der Lenker (1) einen ersten Endabschnitt (2) zur radseitigen Anbindung und einen zweiten Endabschnitt (3) zur Anbindung an einen Fahrwerksträger aufweist und zwischen den beiden Endabschnitten (2, 3) ein als Hohlprofil ausgebildeter Lenkerabschnitt (4) angeordnet ist, **dadurch gekennzeichnet, dass** der Lenkerabschnitt (4) entlang wenigstens 80 % seiner Längserstreckung (L) Querschnittsprofile (7) mit einer relativen Dickenrücklage (rDr) von 25 bis 45 % aufweist.

2. Lenker (1) nach Anspruch 1, **dadurch gekennzeichnet, dass** der Lenkerabschnitt (4) entlang wenigstens 90 % seiner Längserstreckungsrichtung (L), insbesondere entlang seiner gesamten Längserstreckungsrichtung (L) Querschnittsprofile (7) mit einer relativen Dickenrücklage (rDr) von 25 bis 45 % aufweist.

3. Lenker (1) nach Anspruch 1 oder 2, **dadurch gekennzeichnet, dass** die Querschnittsprofile (7) eine relative Dickenrücklage (rDr) von 30 bis 40 %, bevorzugt von 33 bis 38 % aufweisen.

4. Lenker (1) nach einem der Ansprüche 1 bis 3, **dadurch gekennzeichnet, dass** die Querschnittsprofile (7) eine Dickenrücklage (Dr) von 30 bis 70 mm, bevorzugt von 35 bis 60 mm aufweisen.

5. Lenker (1) nach einem der Ansprüche 1 bis 4, **dadurch gekennzeichnet, dass** die Querschnittsprofile (7) eine relative Profildicke (rD) von 30 bis 50 %, bevorzugt von 35 bis 45 %, besonders bevorzugt von 40 bis 45 % aufweisen.

6. Lenker (1) nach einem der Ansprüche 1 bis 5, **dadurch g e k e n n z e ich n e t,** dass die Querschnittsprofile (7) eine Profiltiefe (t) von 80 mm bis 200 mm, bevorzugt 80 mm bis 170 mm, besonders bevorzugt von 90 mm bis 160 mm, ganz besonders bevorzugt von 100 mm bis 150 mm aufweisen.

7. Lenker (1) nach einem der Ansprüche 1 bis 6, **dadurch gekennzeichnet, dass** die Querschnittsprofile (7) eine maximale Profildicke (d) von 35 mm bis 70 mm, bevorzugt von 40 mm bis 60 mm aufweisen.

8. Lenker (1) nach einem der Ansprüche 1 bis 7, **dadurch gekennzeichnet, dass** die obere Schale (12) und die untere Schale (13) miteinander gefügt, insbesondere verschweißt sind.

9. Lenker (1) nach Anspruch 8, **dadurch gekennzeichnet, dass** die obere Schale (12) und die untere Schale (13) im Bereich der Profilnase (8) der Querschnittsprofile (7) auf Stoß miteinander gefügt sind.

10. Lenker (1) nach Anspruch 8 oder 9, **dadurch gekennzeichnet, dass** die obere Schale (12) und die untere Schale (13) im Bereich der Profilhinterkante (9) der Querschnittsprofile (7) überlappend miteinander gefügt sind.

**Geänderte Patentansprüche gemäss Regel 137(2) EPÜ.**

1. Zweischaliger Lenker (1) für eine Radaufhängung eines Kraftfahrzeugs, mit einer oberen Schale (12) und eine untere Schale (13), wobei der Lenker (1) einen ersten Endabschnitt (2) zur radseitigen Anbindung und einen zweiten Endabschnitt (3) zur Anbindung an einen Fahrwerksträger aufweist und zwischen den beiden Endabschnitten (2, 3) ein als Hohlprofil ausgebildeter Lenkerabschnitt (4) angeordnet ist, **dadurch gekennzeichnet, dass** der Lenkerabschnitt (4) entlang wenigstens 80 % seiner Längserstreckung (L) Querschnittsprofile (7) mit einer relativen Dickenrücklage (rDr) von 25 bis 45 % aufweist, wobei eine Profiltiefe (t) dem Abstand zwischen einer Profilnase (8) und einer Profilhinterkante (9) des Querschnittsprofils (7) entspricht, die Profilnase (8) zu einer Frontseite des Kraftfahrzeugs orientiert und die Profilhinterkante (9) zu einer Rückseite des Kraftfahrzeugs orientiert ist, wobei eine maximale Profildicke (d) den maximalen Abstand zwischen einer Oberseite (10) der Kontur eines Querschnittsprofil (7) und einer Unterseite (11) der Kontur eines Querschnittsprofils (7) kennzeichnet und die Dickenrücklage (Dr) ein Maß für den Abstand zwischen der Profilnase (8) und der maximalen Profildicke (d) gemessen entlang der Profiltiefe (t) eines Querschnittsprofils (7) ist, wobei die relative Dickenrücklage (rDr) das Verhältnis der Dickenrücklage (Dr) zur Profiltiefe (t) ist.

2. Lenker (1) nach Anspruch 1, **dadurch gekennzeichnet, dass** der Lenkerabschnitt (4) entlang wenigstens 90 % seiner Längserstreckungsrichtung (L), insbesondere entlang seiner gesamten Längserstreckungsrichtung (L) Querschnittsprofile (7) mit einer relativen Dickenrücklage (rDr) von 25 bis 45 % aufweist.

3. Lenker (1) nach Anspruch 1 oder 2, **dadurch gekennzeichnet, dass** die Querschnittsprofile (7) eine relative Dickenrücklage (rDr) von 30 bis 40 %, bevorzugt von 33 bis 38 % aufweisen.

4. Lenker (1) nach einem der Ansprüche 1 bis 3, **dadurch gekennzeichnet, dass** die Querschnittsprofile (7) eine Dickenrücklage (Dr) von 30 bis 70 mm, bevorzugt von 35 bis 60 mm aufweisen.

5. Lenker (1) nach einem der Ansprüche 1 bis 4, **dadurch gekennzeichnet, dass** die Querschnittsprofile (7) eine relative Profildicke (rD) von 30 bis 50 %, bevorzugt von 35 bis 45 %, besonders bevorzugt von 40 bis 45 % aufweisen, wobei die relative Profildicke (rD) das Verhältnis der maximalen Profildicke (d) zur Profiltiefe (t) ist.

6. Lenker (1) nach einem der Ansprüche 1 bis 5, **dadurch gekennzeichnet, dass** die Querschnittsprofile (7) eine Profiltiefe (t) von 80 mm bis 200 mm, bevorzugt 80 mm bis 170 mm, besonders bevorzugt von 90 mm bis 160 mm, ganz besonders bevorzugt von 100 mm bis 150 mm aufweisen.

7. Lenker (1) nach einem der Ansprüche 1 bis 6, **dadurch gekennzeichnet, dass** die Querschnittsprofile (7) eine maximale Profildicke (d) von 35 mm bis 70 mm, bevorzugt von 40 mm bis 60 mm aufweisen.

8. Lenker (1) nach einem der Ansprüche 1 bis 7, **dadurch gekennzeichnet, dass** die obere Schale (12) und die untere Schale (13) miteinander gefügt, insbesondere verschweißt sind.

9. Lenker (1) nach Anspruch 8, **dadurch gekennzeichnet, dass** die obere Schale (12) und die untere Schale (13) im Bereich der Profilnase (8) der Querschnittsprofile (7) auf Stoß miteinander gefügt sind.

10. Lenker (1) nach Anspruch 8 oder 9, **dadurch gekennzeichnet, dass** die obere Schale (12) und die untere Schale (13) im Bereich der Profilhinterkante (9) der Querschnittsprofile (7) überlappend miteinander gefügt sind.

Fig. 1

Fig. 2

EP 4 782 229 A1

Europäisches Patentamt
European Patent Office
Office européen des brevets

# EUROPÄISCHER RECHERCHENBERICHT

**Nummer der Anmeldung**

EP 25 15 3540

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Anonymous: "F1 wishbone construction, a closer look - F1technical.net", , 1. Februar 2011 (2011-02-01), XP093291859, Gefunden im Internet: URL:https://www.f1technical.net/forum/view topic.php?t=9447 [gefunden am 2025-07-02] * das ganze Dokument * ----- | 1-10 | INV. B60G7/00 |
| X | JP 2017 043187 A (AISIN SEIKI) 2. März 2017 (2017-03-02) * Absatz [0035]; Abbildungen 1-5,12 * ----- | 1-10 | |
| X | DE 10 2015 005501 A1 (AUDI AG [DE]) 3. November 2016 (2016-11-03) * Absatz [0016]; Abbildungen * ----- | 1-7,9,10 | |
| A | Anonymous: "Stock Info Archives - Proformance Metals", , 20. August 2015 (2015-08-20), XP093291868, Gefunden im Internet: URL:https://web.archive.org/web/2016051412 4050/http://proformancemetals.co.uk/catego ry/stock-information/ [gefunden am 2025-07-02] * das ganze Dokument * ----- | 1-10 | RECHERCHIERTE SACHGEBIETE (IPC) B60G B62D |
| A | Anonymous: "Suspension of disbelief - Absorbing F1's forces", , 4. Juli 2013 (2013-07-04), XP093291871, Gefunden im Internet: URL:https://sidepodcast.com/feature/tech-s pec/suspension-of-disbelief-f1-forces [gefunden am 2025-07-02] * das ganze Dokument * ----- -/-- | 1-10 | |

Der vorliegende Recherchenbericht wurde für alle Patentansprüche erstellt

| Recherchenort | Abschlußdatum der Recherche | Prüfer |
|---|---|---|
| Den Haag | 3. Juli 2025 | Cavallo, Frédéric |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

**EUROPÄISCHER RECHERCHENBERICHT**

**Nummer der Anmeldung**

EP 25 15 3540

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Seas: "Suspension", , 2. November 2022 (2022-11-02), XP093291873, Gefunden im Internet: URL:https://web.archive.org/web/2022110215 5711/https://www.formula1-dictionary.net/s uspension.html [gefunden am 2025-07-02] * das ganze Dokument * ----- | 1-10 | |
| A | WO 2016/055704 A1 (PEUGEOT CITROEN AUTOMOBILES SA [FR]) 14. April 2016 (2016-04-14) * Ansprüche; Abbildungen * ----- | 1-10 | |
| A | GB 2 266 282 A (WINKLEMANN ROY [GB]; STEHLIN FRITZ [GB]) 27. Oktober 1993 (1993-10-27) * Seite 3, Zeile 27 - Seite 4, Zeile 8; Abbildungen * ----- | 1-10 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 3. Juli 2025 | Cavallo, Frédéric |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 15 3540

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-07-2025

| Im Recherchenbericht angeführtes Patentdokument | Datum der Veröffentlichung | Mitglied(er) der Patentfamilie | | Datum der Veröffentlichung |
|---|---|---|---|---|
| JP 2017043187 A | 02-03-2017 | KEINE | | |
| DE 102015005501 A1 | 03-11-2016 | KEINE | | |
| WO 2016055704 A1 | 14-04-2016 | CN | 106794732 A | 31-05-2017 |
| | | EP | 3204247 A1 | 16-08-2017 |
| | | FR | 3026991 A1 | 15-04-2016 |
| | | WO | 2016055704 A1 | 14-04-2016 |
| GB 2266282 A | 27-10-1993 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3498504 B1
- US 20070096420 A1
- US 12103352 B2